# FASCICULE DE BREVET EUROPEEN

(11) **EP 3 437 941 B1**
(45) Date de publication et mention de la délivrance du brevet: **15.06.2022**
(21) Numéro de dépôt: 18184001.8
(22) Date de dépôt: 17.07.2018
(51) Int. Cl.: B60S 1/40

(54) **ADAPTATEUR PERFECTIONNÉ POUR UN ESSUIE-GLACE DE VÉHICULE AUTOMOBILE, ET ENSEMBLE COMPORTANT UN TEL ADAPTATEUR**
PERFEKTIONIERTER ADAPTER FÜR EINEN SCHEIBENWISCHER EINES KRAFTFAHRZEUGS, UND EINHEIT, DIE EINEN SOLCHEN ADAPTER UMFASST
PROTECTED ADAPTER FOR A MOTOR VEHICLE WINDSCREEN WIPER AND ASSEMBLY COMPRISING SUCH AN ADAPTER

(30) Priorité: 31.07.2017 FR 1757282
(43) Date de publication de la demande: 06.02.2019
(73) Titulaire: Valeo Systèmes d'Essuyage, 78322 Le Mesnil Saint Denis (FR)
(72) Inventeur: MONEYRON, Patrick, 63500 ISSOIRE (FR); ESPINASSE, Philippe, 63500 ISSOIRE (FR); TERRASSE, William, 63500 ISSOIRE (FR)
(74) Mandataire: Valeo Visibility

(56) Documents cités:
- EP-A1- 3 339 114
- WO-A1-02/053421
- DE-A1- 10 130 903
- US-A1- 2013 111 691
- US-B2- 7 690 074

## Description

### DOMAINE TECHNIQUE DE L'INVENTION

L'invention concerne notamment un adaptateur pour un essuie-glace, en particulier de véhicule automobile.

L'invention concerne encore un ensemble comportant un bras d'essuie-glace et un adaptateur selon l'invention.

L'invention concerne également un ensemble comportant un balai d'essuie-glace et un système de connexion destiné à relier le balai d'essuie-glace à un bras d'entraînement, ledit système de connexion comprenant un connecteur fixé sur balai d'essuie-glace et un adaptateur selon l'invention.

### ARRIERE PLAN TECHNIQUE DE L'INVENTION

Un véhicule automobile est classiquement équipé d'essuie-glaces, notamment pour assurer un essuyage de la surface extérieure du pare-brise et éviter ainsi que la vision qu'a le conducteur de son environnement ne soit perturbé.

Un essuie-glace comprend en général un bras d'entraînement, effectuant un mouvement de va-et-vient, notamment angulaire, et un balai d'essuie-glace allongé longitudinalement qui porte une lame d'essuyage ou lame racleuse réalisée en une matière élastique telle que du caoutchouc ou un matériau élastomère.

La lame d'essuyage frotte contre la surface extérieure du pare-brise et évacue l'eau en l'amenant en dehors du champ de vision du conducteur.

Dans une version classique, le balai d'essuie-glace est réalisé sous la forme d'étriers articulés qui tiennent la lame racleuse d'essuyage en plusieurs endroits discrets répartis longitudinalement en lui conférant un cintrage lui permettant d'épouser la courbure ou galbe du pare-brise.

Dans une version plus récente dénommée "flat blade" (pour "lame plate"), le balai d'essuie-glace est réalisé sous la forme d'un ensemble semi-rigide qui maintient la lame d'essuyage sur toute sa longueur grâce à une ou des vertèbres de cintrage permettant d'appliquer le balai et la lame d'essuyage sur le pare-brise sans avoir à utiliser d'étriers.

Dans les deux conceptions, le balai d'essuie-glace est relié au bras d'entraînement par un système de connexion comportant un connecteur et un adaptateur complémentaires.

Le connecteur est une pièce qui est solidarisée au balai d'essuie-glace, tandis que l'adaptateur est solidaire du bras d'entraînement.

L'adaptateur est une pièce intermédiaire qui permet la liaison et la fixation du connecteur sur le bras d'entraînement. Il est en général conformé pour être engagé dans une tête ou pièce terminale en forme de chape et à section transversale en U renversé du bras d'entraînement.

Chacun de ces deux composants (connecteur et adaptateur) comporte des moyens d'articulation conçus pour coopérer avec des moyens complémentaires de l'autre composant, pour définir au moins un axe transversal d'articulation des deux composants l'un par rapport à l'autre, qui est aussi l'axe d'articulation du balai d'essuie-glace par rapport au bras d'entraînement.

Selon une technique connue, l'un des composants, tel que le connecteur, comprend en général un axe physique sensiblement cylindrique qui définit l'axe d'articulation et qui est reçu dans un logement de forme complémentaire de l'autre composant.

L'adaptateur comporte en général un corps allongé qui est conformé pour être engagé dans la pièce terminale d'extrémité libre avant du bras d'entraînement de façon que ce corps s'étende au moins en partie entre deux parois latérales sensiblement parallèles de cette pièce terminale.

Un adaptateur permet d'associer un balai d'essuie-glace à un type particulier de pièce terminale. Dans le cas des pièces terminales précitées à section en U renversé, il en existe plusieurs variétés avec différentes conceptions de moyens de verrouillage de la chape sur l'adaptateur.

On connaît un bras d'essuie-glace dont la pièce terminale est une chape à section en U renversé qui comporte une paire d'ergots avant de verrouillage qui sont aptes à coopérer avec des crans associés de l'adaptateur pour fixer et verrouiller de manière démontable la chape sur l'adaptateur, ce dernier comportant des moyens complémentaires de verrouillage aptes à coopérer avec des moyens associés de la chape, tels que par exemple une branche élastique portant un bouton de déverrouillage qui est apte à coopérer avec une surface de butée de la chape pour immobiliser longitudinalement l'adaptateur dans un sens par rapport à la chape.

Un exemple d'une conception d'adaptateur adapté à ce type de chape est par exemple illustré dans le document US-B-7.690.074. Un autre exemple d'une conception d'adaptateur est décrit dans le document DE-A-10130903.

L'invention propose un adaptateur perfectionné de ce type qui soit simple, efficace et économique, et particulièrement aisé à monter et à verrouiller dans la chape, tout en assurant une liaison fiable entre ces deux composants après montage.

### BREF RESUME DE L'INVENTION

L'invention est définie par la revendication 1. Il est proposé un adaptateur pour un essuie-glace, notamment de véhicule automobile, comportant un corps de forme allongé longitudinalement qui est délimité par deux faces latérales externes longitudinales et verticales et qui est conformé pour être monté dans une chape complémentaire à section en U renversé appartenant à un bras d'essuie-glace, cette chape comportant une paire d'ergots avant de verrouillage et une surface de butée qui sont aptes à coopérer avec des parties associées de l'adaptateur pour fixer de manière démontable la chape sur l'adaptateur, chacune des faces latérales externes du corps de l'adaptateur comportant un cran avant de verrouillage dont chacun est apte à recevoir un ergot avant de verrouillage associé de la chape,
et le corps de l'adaptateur étant muni d'une branche élastique portant un bouton de déverrouillage qui est apte à coopérer avec la surface de butée de la chape pour immobiliser longitudinalement l'adaptateur dans un sens par rapport à la chape, la branche élastique s'étendant longitudinalement au-delà d'une face transversale d'extrémité du corps.

Selon l'invention :
- le bouton de déverrouillage est décalé verticalement vers le bas par rapport à une face supérieure du corps de l'adaptateur ;
- chacune des faces latérales longitudinales du corps de l'adaptateur comporte une rainure verticale arrière débouchante à ses deux extrémités, chaque rainure étant apte à recevoir en coulissement un ergot associé de la chape, chacune des faces latérales longitudinales comportant à son extrémité inférieure un cran associé de verrouillage, chaque rainure verticale arrière débouchant dans le cran associé ;
- la branche élastique s'étend longitudinalement au-delà d'une face transversale d'extrémité avant du corps la branche élastique, en position montée et fixée de la chape sur l'adaptateur, s'étendant en regard d'une face interne d'une paroi transversale d'extrémité avant de la chape.

Selon d'autres caractéristiques de l'adaptateur :
- le bouton de déverrouillage est agencée à l'extrémité de la branche élastique ;
- le bouton de déverrouillage comporte une surface de verrouillage d'orientation transversale apte à coopérer avec la surface de butée de la chape, ladite surface de verrouillage s'étendant de préférence au niveau de l'arrière du bouton de déverrouillage ;
- la surface de verrouillage s'étend dans un plan vertical ;
- le bouton de déverrouillage présente, vu de dessous, c'est-à-dire vu depuis le balai d'essuie-glace lorsque l'adaptateur est positionné sur ce dernier, une forme de U comprenant ainsi au moins deux branches reliées entre elles par une base ;
- la base de la forme de U que prend le bouton de déverrouillage s'étend selon une direction perpendiculaire à un axe d'extension principal de l'adaptateur ;
- les deux branches et la base de la forme de U que prend le bouton de déverrouillage délimitent un espace ouvert en direction du balai d'essuie-glace lorsque l'adaptateur est agencé sur ce balai d'essuie-glace ;
- le bouton de déverrouillage comprend une face supérieure pleine qui relie au moins les deux branches de la forme de U entre elles, cette face supérieure étant distincte de la base de la forme de U ;
- chacune des faces latérales longitudinales du corps de l'adaptateur comporte une rainure verticale avant débouchante à ses deux extrémités, chaque rainure étant apte à recevoir en coulissement un ergot associé de la chape, chacune des faces latérales longitudinales comportant à son extrémité inférieure un cran associé de verrouillage, chaque rainure verticale avant débouchant dans le cran associé.

L'invention propose aussi un ensemble comportant un bras d'essuie-glace et un adaptateur selon l'invention, caractérisé en en ce que la chape du bras d'essuie-glace comporte une paroi transversale d'extrémité avant d'orientation verticale qui comporte un évidement, et en ce que, en position montée et verrouillée de la chape sur l'adaptateur, la branche élastique s'étend longitudinalement vers l'avant à travers l'évidement.

L'invention propose aussi un ensemble comportant un balai d'essuie-glace et un système de connexion destiné à relier le balai d'essuie-glace à un bras d'entraînement, ledit système de connexion comprenant un connecteur fixé sur balai d'essuie-glace et un adaptateur selon l'invention, le connecteur et l'adaptateur étant reliés l'un à l'autre par des moyens d'articulation.

### BREVE DESCRIPTION DES FIGURES

D'autres caractéristiques et avantages de l'invention apparaîtront au cours de la lecture de la description détaillée qui va suivre pour la compréhension de laquelle on se reportera aux dessins annexés dans lesquels :
- la figure 1 est une vue schématique en perspective d'un essuie-glace comportant un balai d'essuie-glace et un bras d'entrainement relié l'un à l'autre par un système de connexion comprenant un connecteur et un adaptateur, le bras d'entraînement comportant une tige et une chape d'extrémité ;
- la figure 2 est une vue à grande échelle en perspective qui illustre le connecteur solidarisé directement sur le balai d'essuie-glace ;

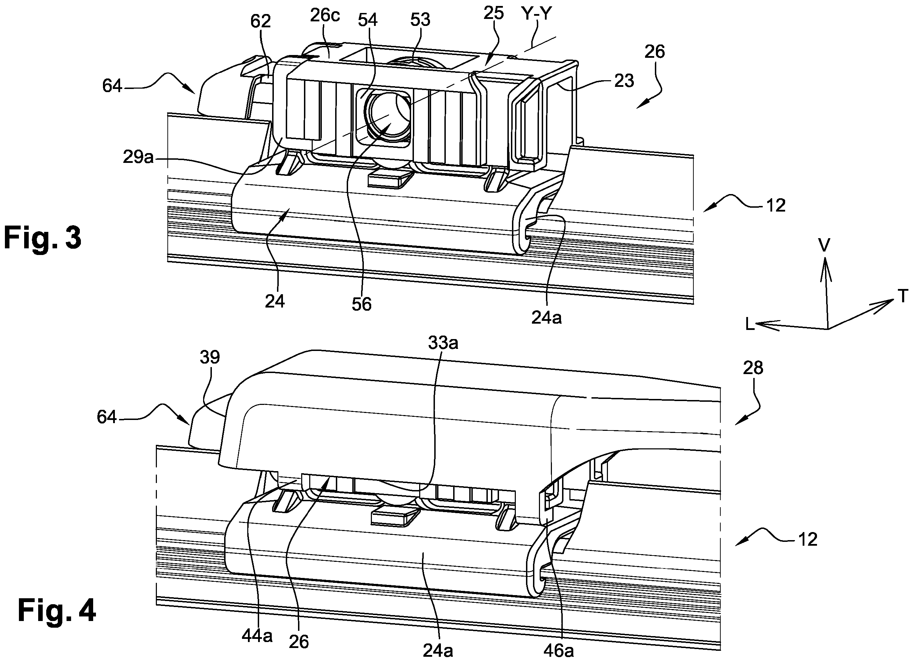

- la figure 3 est une vue analogue à celle de la figure 2 qui illustre l'adaptateur en position montée sur le connecteur ;
- la figure 4 est une vue analogue à celle de la figure 3 qui illustre la chape d'extrémité en position montée et verrouillée sur l'adaptateur selon l'invention ;
- la figure 5 est une vue en perspective de dessous qui illustre à grande échelle la chape d'extrémité en position montée et verrouillée sur l'adaptateur selon l'invention ;
- la figure 6 est vue en section par un plan longitudinal et vertical médian de l'ensemble illustré à la figure 5 ;
- la figure 7 est une vue en coupe analogue à celle de la figure 6 selon un autre plan longitudinal et vertical par passant les ergots avant et arrière de verrouillage de la chape d'extrémité ;
- la figure 8 est vue de l'ensemble illustré à la figure 5, en section par un plan transversal et vertical passant par les ergots avant de verrouillage de la chape d'extrémité ;
- la figure 9 est vue de l'ensemble illustré à la figure 5, en section par un plan transversal et vertical passant par les ergots arrière de verrouillage de la chape d'extrémité;
- les figures 10 et 11 sont deux vues à grande échelle de l'adaptateur selon l'invention qui est illustré en perspective selon deux angles différents de vue ;
- la figure 12 est une vue latérale à grande échelle de l'adaptateur selon l'invention ;
- la figure 13 est une vue à grande échelle et en perspective de dessous de la chape d'extrémité du bras d'essuie-glace ; et
- la figure 14 est une vue en perspective qui illustre en détail la branche élastique avec son bouton de verrouillage en position de verrouillage dans la chape d'extrémité.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" sur les figures. On définit aussi un plan horizontal qui s'étend longitudinalement et transversalement.

Ainsi, dans la description, les dénominations longitudinales, verticales ou transversales se réfèrent à l'orientation du balai d'essuie-glace ou du bras d'entraînement.

La direction longitudinale correspond à l'axe principal du balai d'essuie-glace ou du bras d'entraînement dans lequel il s'étend d'arrière en avant selon l'orientation de l'axe L du trièdre L, V, T.

Les orientations latérales correspondent quant à elle à des droites concourantes, c'est-à-dire qui croisent la direction longitudinale, notamment en étant perpendiculaires à l'axe longitudinal du balai d'essuie-glace ou du bras d'entraînement.

Les dénominations arrière ou avant s'apprécient par rapport au point de fixation du balai sur le bras, la dénomination arrière correspondant à la partie où le bras et un demi-balai s'étendent, ou par rapport au point de fixation du bras au véhicule.

Les dénominations interne, externe, intérieure ou extérieure peuvent faire référence à une pièce dans sa globalité, et concernent par exemple l'intérieur ou l'extérieur de cette pièce.

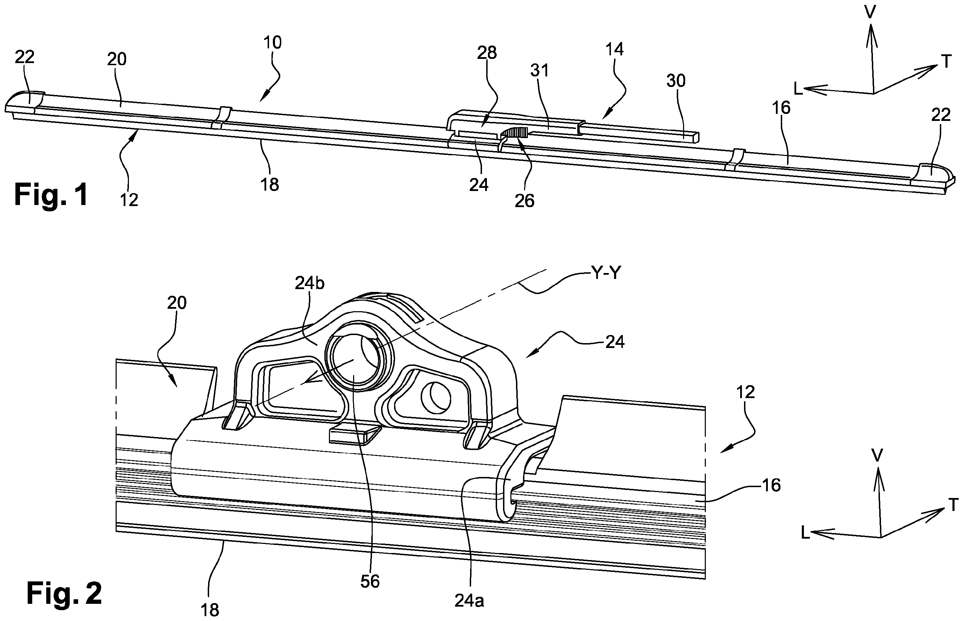

On a représenté à la figure 1, un essuie-glace 10 comportant notamment un balai d'essuie-glace 12 et un bras 14 d'entraînement (aussi appelé bras d'essuie-glace) du balai d'essuie-glace 12.

Le balai 12 est ici du type "flat blade" et comprend un corps longitudinal 16, une lame d'essuyage 18, en général en caoutchouc ou en matériau élastomère, et au moins une vertèbre (non représentée) qui rigidifie la lame et favorise son application sur la surface extérieure d'une vitre du véhicule telle que par exemple un pare-brise galbé (non représenté) du véhicule.

Le corps longitudinal 16 du balai d'essuie-glace 12 comporte un déflecteur aérodynamique supérieur 20 destiné à améliorer le fonctionnement du système d'essuyage, ce déflecteur ayant pour fonction d'améliorer l'application du balai d'essuie-glace 12 sur le pare-brise, et donc d'améliorer la performance aérodynamique de l'essuie-glace 10.

Le balai d'essuie-glace 12 comporte en outre des embouts d'extrémité 22, ou agrafes d'accrochage, de la lame 18 et de la vertèbre sur le corps longitudinal 16, ces embouts 22 étant situés à chacune des deux extrémités longitudinales opposées avant et arrière du corps longitudinal 16.

Le bras d'entraînement 14 est destiné à être entraîné par un moteur pour suivre un mouvement de va-et-vient, et par exemple un mouvement alterné angulaire, permettant à la lame d'essuyage 18 d'évacuer l'eau et éventuellement d'autres éléments indésirables recouvrant la surface extérieure du pare-brise.

Sensiblement à mi longueur, le balai d'essuie-glace 12 comprend un ensemble de connexion comportant un connecteur 24 intermédiaire et un adaptateur 26.

L'adaptateur 26 est ici une pièce réalisée par moulage en une seule pièce et il présente une symétrie de conception par rapport à un plan longitudinal et vertical médian. De préférence, l'adaptateur selon l'invention est réalisé en matière plastique.

L'adaptateur 26 solidaire du bras 14 est monté sur le connecteur 24 de façon à permettre un degré de liberté en rotation autour d'un axe transversal d'articulation Y-Y qui est sensiblement perpendiculaire à l'axe longitudinal du balai d'essuie-glace 12.

Ce degré de liberté permet une rotation dans les deux sens du balai d'essuie-glace 12 par rapport au bras d'entraînement 14 et permet ainsi au balai d'essuie-glace 12, lors de ses déplacements, de suivre la courbure ou galbe du pare-brise.

L'adaptateur 26 assure la liaison du balai d'essuie-glace 12 au bras d'entraînement 14 et en particulier avec une tête ou pièce terminale d'extrémité longitudinale avant du bras d'entraînement 14 qui peut être formée d'une seule pièce avec le bras d'entraînement, ou bien être rapportée et fixée sur celui-ci.

Aux figures, la pièce terminale du bras d'entraînement est un tronçon d'extrémité libre avant en forme d'une chape 28 à section transversale sensiblement en U renversé.

A titre d'exemple non limitatif, la chape 28 a une forme allongée qui s'étend selon un axe longitudinal qui est en général sensiblement parallèle à l'axe général longitudinal du balai d'essuie-glace 12.

La chape 28 comprend une partie arrière 31 de liaison au reste du bras d'entraînement 14, qui comporte ici une tige de bras 30 auquel la chape 28 est par exemple fixée par sertissage.

En section par un plan vertical et transversale, la chape 28 a une section sensiblement en forme de U renversé.

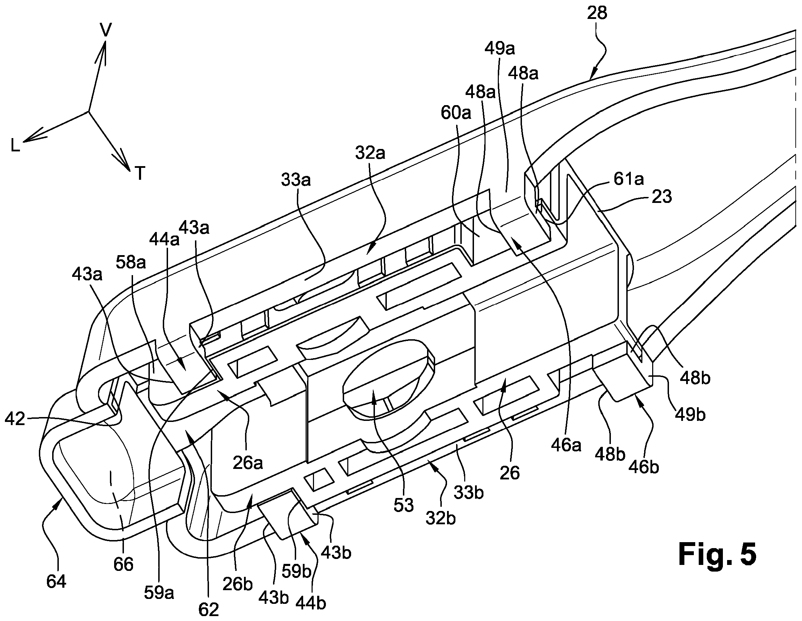

Comme illustré en détails aux figures 5, 6 et 13, la chape 28 comprend deux parois latérales verticales d'orientation longitudinale 32a, 32b dont les bords longitudinaux supérieurs sont reliés entre eux par une paroi transversale supérieure d'orientation longitudinale 34. Les parois 32a, 32b et 34 délimitent entre elles un espace intérieur 36 de logement de l'adaptateur 26.

A leur extrémité avant, les parois latérales 32a, 32b sont reliées entre elles par une paroi transversale verticale avant 40 qui comporte un évidement central 42 de contour rectangulaire qui débouche verticalement vers le bas dans le bord transversal inférieur de la paroi avant 40.

L'évidement 40 est délimité verticalement vers le haut par un bord horizontal transversal 41 qui est adjacent à une portion supérieure 39 de la face externe de la paroi transversale avant 40 de la chape 28.

Les parois latérales 32a, 32b sont délimitées verticalement vers le bas par des bords longitudinaux inférieurs 33a, 33b.

Chaque bord longitudinal inférieur 33a, 33b comporte, au voisinage de son extrémité avant, un ergot avant de verrouillage 44a, 44b et, au voisinage de son extrémité arrière, un ergot arrière de verrouillage 46a, 46b.

Les ergots avant forment une paire d'ergots avant de verrouillage 44a, 44b qui sont alignés longitudinalement, et les ergots arrière forment une paire d'ergots arrière de verrouillage 46a, 46b qui sont alignés longitudinalement.

Chaque ergot avant de verrouillage 44a, 44b, se présente sous la forme d'une patte horizontale de verrouillage qui s'étend transversalement vers l'intérieur et qui est délimitée par une face horizontale supérieure 45a, 45b, respectivement.

Chaque patte horizontale de verrouillage 44a, 44b, est aussi délimitée par une paire de faces transversales et verticales 43a, 43b.

Chaque ergot arrière de verrouillage 46a, 46b, se présente sous la forme d'une patte horizontale de verrouillage qui s'étend transversalement vers l'intérieur et qui est délimitée par une face horizontale supérieure 47a, 47b, respectivement. Chaque patte horizontale de verrouillage 46a, 46b, est aussi délimitée par une paire de faces transversales et verticales 48a, 48b.

Chaque patte horizontale arrière de verrouillage 46a, 46b est reliée au bord longitudinal inférieur associé 33a, 33b par une patte verticale de liaison 49a, 49b.

L'adaptateur 26, comporte un corps principal allongé 25 qui est conformé pour être monté dans l'espace interne 36 de la chape 28.

En section par un plan vertical transversal, l'adaptateur a une forme sensiblement en U renversé. Il comporte deux parois latérales 26a, 26b verticales et longitudinales qui sont délimitées longitudinalement vers l'avant par un bord vertical 27a, 27b respectivement d'extrémité longitudinale avant.

Les deux parois latérales 26a, 26b sont reliées ensemble par une paroi supérieure horizontale 26c qui comprend ici un évidemment central 50 de contour rectangulaire allongé.

Chaque paroi latérale 26a, 26b est délimitée par une face latérale externe 29a, 29b d'orientation longitudinale et verticale.

Le corps 25 de l'adaptateur 26 est aussi délimité longitudinalement vers l'arrière par une face transversale et verticale arrière 23 qui est évidée centralement et qui présente une forme générale de U renversé.

Les parois latérales 26a, 26b comprennent respectivement un orifice 54 et un tourillon 53 alignés transversalement. Ces éléments 53 et 54 sont situés longitudinalement sensiblement au milieu des parois latérales 26a, 26b de l'adaptateur 26.

Les éléments 53 et 54 définissent l'axe Y-Y sensiblement transversal d'articulation en rotation du connecteur 24 par rapport à l'adaptateur 26, et donc du balai d'essuie-glace 12 par rapport au bras d'entraînement 14.

Le connecteur 24 comprend essentiellement, une partie inférieure 24a de sertissage ou de fixation sur le balai d'essuie-glace 12, et une partie supérieure 24b destinée à être logée entre les faces internes des parois latérales 26a, 26b de l'adaptateur 26.

La partie supérieure 24b comporte des moyens 56 complémentaires des éléments 53 et 54 destinés à être alignés avec l'axe Y-Y.

En variante non représentée, l'un des composants parmi l'adaptateur 26 et le connecteur 24 peut comporter des tourillons cylindriques centrés sur l'axe Y-Y et destinés à être engagés par encliquetage élastique dans un orifice ou des orifices complémentaires de l'autre de ces composants.

Pour recevoir un ergot avant de verrouillage associé 44a, 44b - au voisinage de son extrémité avant - chaque paroi latérale 26a, 26b comporte une rainure avant 58a, 58b en "L" qui comporte un tronçon inférieur horizontal 59a, 59b qui est ouvert vers l'avant.

Chaque ergot avant de verrouillage 44a, 44b peut être introduit verticalement de haut en bas dans la rainure associée 58a, 58b puis glissé longitudinalement vers l'arrière dans le tronçon inférieur 59a, 59b formant cran avant de verrouillage pour réaliser un montage et verrouillage du type "à baïonnette".

Cette position engagée des ergots avant de verrouillage 44a, 44b dans leurs crans de verrouillage 59a, 59b est illustrée en détails aux figures 5 à 8.

Pour recevoir un ergot arrière de verrouillage associé 46a, 46b - au voisinage de son extrémité arrière - chaque paroi latérale 26a, 26b comporte une rainure arrière verticale 60a, 60b rectiligne qui se prolonge par une facette inférieure horizontale 61a, 61b qui est ouvert vers l'avant de manière à communiquer avec la rainure arrière verticale 60a, 60b.

Chaque ergot arrière de verrouillage 46a, 46b peut être introduit verticalement de haut en bas dans la rainure verticale associée 60a, 60b puis longitudinalement sous la facette horizontale associée 61a, 61b formant cran arrière de verrouillage pour réaliser un montage et verrouillage du type "à baïonnette".

Cette position engagée des ergots arrière de verrouillage 46a, 46b dans leurs crans arrière de verrouillage est illustrée en détails aux figures 5 à 8.

On décrira maintenant les moyens complémentaires de verrouillage du montage de la chape 28 sur l'adaptateur 26, notamment afin d'éviter tout déboîtement accidentel des ergots de verrouillage 44a, 44b, 46a et 46b, tout en permettant un déverrouillage commandé de ce montage.

A cet effet, à son extrémité longitudinale avant, le corps 25 de l'adaptateur 26 comporte ici une branche élastique de verrouillage 62 qui porte un bouton 64 de commande du déverrouillage.

La branche élastique 62 s'étend longitudinalement au-delà de la face transversale d'extrémité avant du corps 25 de l'adaptateur 26 qui est définie notamment par les bords verticaux 27a, 27b d'extrémité longitudinale avant des parois latérales 26a, 26b du corps 25.

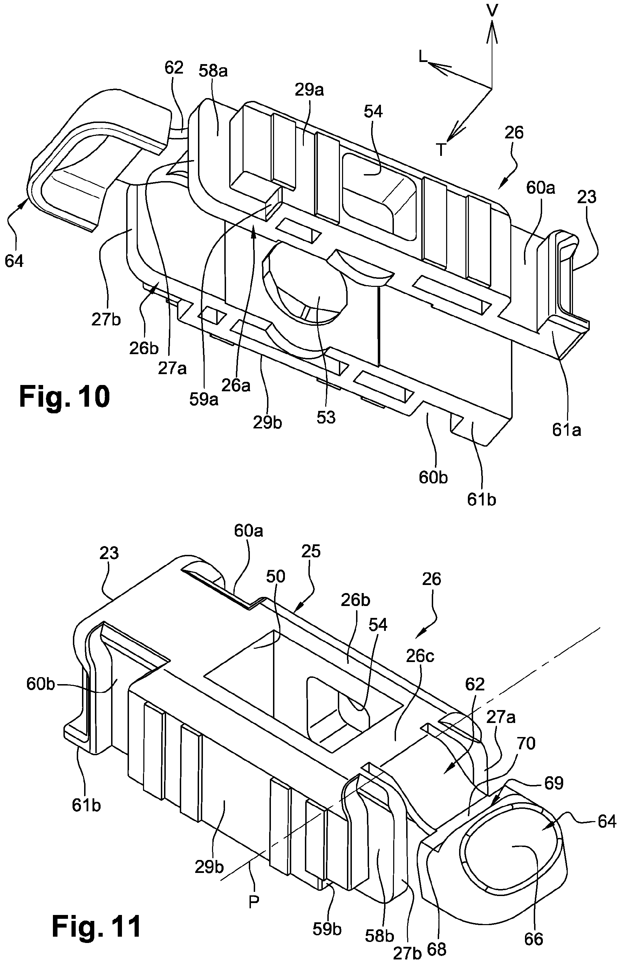

Afin de posséder une longueur et une flexibilité suffisante, et comme on peut le voir notamment à la figure 11, la branche élastique 62 s'étend en partie entre les parois latérales 26a et 26b et dans le prolongement de la paroi supérieure horizontale 26c du corps 25.

Dans sa généralité, le bouton 64 de déverrouillage présente, vu de dessous, c'est-à-dire vu depuis le balai d'essuie-glace 12 lorsque l'adaptateur 26 est positionné sur ce dernier, une forme de U comprenant ainsi au moins deux branches reliées entre elles par une base. Tel qu'illustré, cette base de la forme de U s'étend selon une direction perpendiculaire à un axe d'extension principal de l'adaptateur 26. Selon l'orientation de l'adaptateur 26 sur les figures, cette base s'étend ainsi selon une direction perpendiculaire à la direction longitudinale, c'est-à-dire perpendiculaire à l'axe L du trièdre illustré. En outre, les deux branches et la base de cette forme en U délimitent un espace ouvert en direction du balai d'essuie-glace 12 lorsque l'adaptateur 26 est agencé sur ce balai d'essuie-glace 12.

Enfin, le bouton 64 de déverrouillage comprend une face supérieure pleine qui relie au moins les deux branches de la forme de U entre elles, cette face supérieure étant distincte de la base de la forme de U.

Le bouton 64 de déverrouillage est agencé à l'extrémité libre avant de la branche élastique 62 et il comporte dans sa face supérieure une forme concave 66 apte à recevoir par exemple l'extrémité d'un doigt d'un utilisateur.

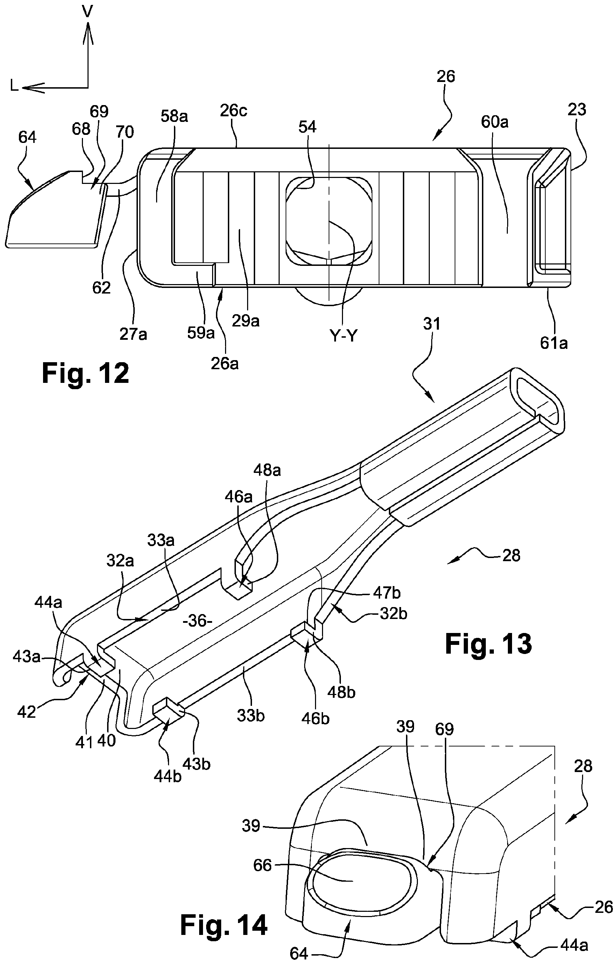

Comme illustré à la figure 12, le bouton de déverrouillage 64 est décalé verticalement vers le bas par rapport à la face supérieure de la paroi supérieure 26c du corps 25 de l'adaptateur 26.

Le bouton de déverrouillage 64 est aussi décalé longitudinalement vers l'avant par rapport au plan de la face transversale d'extrémité avant du corps 25 de l'adaptateur 26.

A sa partie arrière, le bouton de déverrouillage 64 comporte une entaille 69 d'orientation transversale à profil en « L » qui est délimitée par une surface transversale verticale de verrouillage 68 orientée vers l'arrière et par une surface transversale horizontale 70 qui s'étend dans le prolongement de la face supérieure de la branche élastique 62.

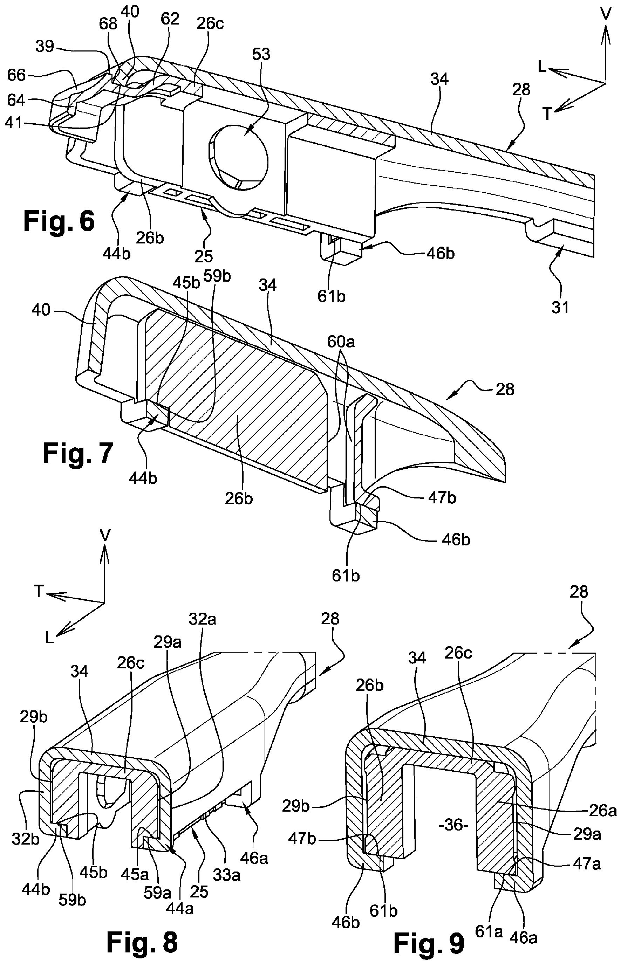

Comme on peut le voir aux figures 6 et 14, les dimensions et le positionnement de la surface de verrouillage 68 et la configuration de la branche élastique 62 sont tels que, en position montée et verrouillée de la chape 28 sur l'adaptateur 26, la surface de verrouillage 68 s'étend en regard de la surface de butée de la chape constituée par la portion supérieure 39 de la face externe de la paroi transversale avant 40 de la chape 28.

Cette portion de surface 39 constitue la surface de butée au sens de l'invention.

Dans cette même position, le bord horizontal transversal 41 de l'évidement 40 est adjacent à la surface transversale horizontale supérieure 70 de l'entaille 69.

De préférence, le bord 41 et la surface transversale horizontale supérieure 70 de l'entaille 69 sont en contact mutuel précontraint élastiquement du fait d'une légère précontrainte exercée par la branche élastique 62.

De manière à permettre l'engagement puis l'emboîtement de la branche élastique 62 dans l'évidement 40, la branche élastique 62 est conçue pour se déformer élastiquement dans un plan vertical longitudinal parallèle aux faces latérales externes 29a, 29b du corps 25 de l'adaptateur 26.

A cet effet, au voisinage de son extrémité longitudinale arrière, la branche élastique 62 est apte à se déformer élastiquement et à pivoter autour d'un axe géométrique transversal "P".

Pour provoquer une telle déformation élastique en vue du déverrouillage, il suffit à l'utilisateur d'agir sur le bouton de verrouillage 64, verticalement de haut en bas.

Pour monter et verrouiller l'adaptateur 26 dans la chape 28, on commence par introduire verticalement les ergots avant de verrouillage 44a et 44b dans les rainures verticales avant 58a, 58b et simultanément les ergots arrière de verrouillage 46a et 46b dans les rainures verticales arrière 60a, 60b, puis à les introduire longitudinalement respectivement dans les crans avant de verrouillage 59a, 59b et sous les facettes horizontales 61a, 61b. Lors du mouvement vertical vers le bas, le bord transversal inférieur 41 de l'évidement 40 coopère avec la portion en vis-à-vis de la surface supérieure du bouton de verrouillage 64 pour provoquer la déformation élastique et le pivotement nécessaires de la branche élastique.

## Revendications

1. Adaptateur (26) pour un essuie-glace, notamment de véhicule automobile, comportant un corps (25) de forme allongé longitudinalement qui est délimité par deux faces latérales externes (29a, 29b) longitudinales et verticales et qui est conformé pour être monté dans une chape complémentaire (28) à section en U renversé appartenant à un bras d'essuie-glace, cette chape (28) comportant une paire d'ergots avant (44a, 44b) de verrouillage et une surface de butée (39) qui sont aptes à coopérer avec des parties associées de l'adaptateur pour fixer de manière démontable la chape (28) sur l'adaptateur (26),
chacune des faces latérales externes (29a, 29b) du corps (25) de l'adaptateur (26) comportant un cran avant (59a, 59b) de verrouillage dont chacun est apte à recevoir un ergot avant (44a, 44b) de verrouillage associé de la chape (28),
et le corps (25) de l'adaptateur (26) étant muni d'une branche élastique (62) portant un bouton (64) de déverrouillage qui est apte à coopérer avec la surface de butée (39) de la chape (28) pour immobiliser longitudinalement l'adaptateur (26) dans un sens par rapport à la chape (28),
chacune des faces latérales longitudinales (29a, 29b) du corps (25) de l'adaptateur (26) comportant une rainure verticale arrière (60a, 60b) débouchante à ses deux extrémités, chaque rainure étant apte à recevoir en coulissement un ergot associé (46a, 46b) de la chape (28), chacune des faces latérales longitudinales (29a, 29b) comportant à son extrémité inférieure un cran associé (61a, 61b) de verrouillage, chaque rainure verticale arrière (60a, 60b) débouchant dans le cran associé (61a, 61b),
**caractérisé en ce que** la branche élastique (62) s'étend longitudinalement au-delà d'une face transversale d'extrémité (27a, 27b) du corps (25) de l'adaptateur (26), le bouton (64) de déverrouillage étant décalé verticalement vers le bas par rapport à une face supérieure (26c) du corps (25) de l'adaptateur (26), le bouton (64) de déverrouillage étant aussi décalé longitudinalement vers l'avant par rapport au plan de la face transversal d'extrémité du corps (25) de l'adaptateur (26), et **en ce que** la branche élastique (62), en position montée et fixée de la chape (28) sur l'adaptateur (26), s'étend en regard d'une face interne d'une paroi transversale d'extrémité avant (40) de la chape (28).

2. Adaptateur selon la revendication 1, **caractérisé en ce que** le bouton (64) de déverrouillage est agencée à l'extrémité de la branche élastique (62).

3. Adaptateur selon la revendication 1 ou 2, **caractérisé en ce que** le bouton (64) de déverrouillage comporte une surface de verrouillage (68) d'orientation transversale apte à coopérer avec la surface de butée (39) de la chape (28), ladite surface de verrouillage s'étendant de préférence au niveau de l'arrière du bouton (64) de déverrouillage.

4. Adaptateur selon la revendication 3, **caractérisé en ce que** la surface de verrouillage (68) s'étend dans un plan vertical.

5. Adaptateur selon l'une quelconque des revendications précédentes, **caractérisé en ce que** chacune des faces latérales longitudinales (29a, 29b) du corps (25) de l'adaptateur (26) comporte une rainure verticale avant (58a, 58b) débouchante à ses deux extrémités, chaque rainure étant apte à recevoir en coulissement un ergot associé (44a, 44b) de la chape (28), chacune des faces latérales longitudinales (29a, 29b) comportant à son extrémité inférieure un cran associé (59a, 59b) de verrouillage, chaque rainure verticale avant (58a, 58b) débouchant dans le cran associé (59a, 59b).

6. Ensemble comportant un bras d'essuie-glace et un adaptateur (26) selon l'une quelconque des revendications précédentes, caractérisé en en ce que la chape (28) du bras d'essuie-glace comporte une paroi transversale d'extrémité avant (40) d'orientation verticale qui comporte un évidement (42), et en ce que, en position montée et verrouillée de la chape (28) sur l'adaptateur (26), la branche élastique (62) s'étend longitudinalement vers l'avant à travers l'évidement (42).

7. Ensemble comportant un balai d'essuie-glace et un système de connexion destiné à relier le balai d'essuie-glace à un bras d'entraînement, ledit système de connexion comprenant un connecteur fixé sur balai d'essuie-glace et un adaptateur selon l'une quelconque des revendications 1 à 5, le connecteur et l'adaptateur étant reliés l'un à l'autre par des moyens d'articulation.

## Patentansprüche

1. Adapter (26) für einen Scheibenwischer, insbesondere eines Kraftfahrzeugs, der einen Körper (25) von in Längsrichtung lang gestreckter Form umfasst, welcher von zwei längs verlaufenden und vertikalen äußeren Seitenflächen (29a, 29b) begrenzt wird und welcher dafür ausgebildet ist, in einer komplementären Abdeckung (28) mit umgekehrt U-förmigem Querschnitt angebracht zu werden, die zu einem Scheibenwischerarm gehört, wobei diese Abdeckung (28) ein Paar vordere Verriegelungsansätze (44a, 44b) und eine Anschlagfläche (39) umfasst, welche geeignet sind, mit zugeordneten Teilen des Adapters zusammenzuwirken, um die Abdeckung (28) demontierbar auf dem Adapter (26) zu befestigen, wobei jede der äußeren Seitenflächen (29a, 29b) des Körpers (25) des Adapters (26) einen vorderen Verriegelungsausschnitt (59a, 59b) umfasst, der jeweils geeignet ist, einen zugeordneten vorderen Verriegelungsansatz (44a, 44b) der Abdeckung (28) aufzunehmen,
und wobei der Körper (25) des Adapters (26) mit einem elastischen Schenkel (62) versehen ist, der eine Entriegelungstaste (64) trägt, welche geeignet ist, mit der Anschlagfläche (39) der Abdeckung (28) zusammenzuwirken, um den Adapter (26) in einer Richtung in Bezug auf die Abdeckung (28) längs zu blockieren,
wobei jede der längs verlaufenden Seitenflächen (29a, 29b) des Körpers (25) des Adapters (26) eine an ihren zwei Enden mündende hintere vertikale Nut (60a, 60b) umfasst, wobei jede Nut geeignet ist, einen zugeordneten Ansatz (46a, 46b) der Abdeckung (28) gleitend aufzunehmen, wobei jede der längs verlaufenden Seitenflächen (29a, 29b) an ihrem unteren Ende einen zugeordneten Verriegelungsausschnitt (61a, 61b) umfasst, wobei jede hintere vertikale Nut (60a, 60b) in den zugeordneten Ausschnitt (61a, 61b) mündet,
**dadurch gekennzeichnet, dass** sich der elastische Schenkel (62) in Längsrichtung über eine quer verlaufende Endfläche (27a, 27b) des Körpers (25) des Adapters (26) hinaus erstreckt, wobei die Entriegelungstaste (64) in Bezug auf eine Oberseite (26c) des Körpers (25) des Adapters (26) vertikal nach unten versetzt ist, wobei die Entriegelungstaste (64) außerdem in Bezug auf die Ebene der quer verlaufende Endfläche des Körpers (25) des Adapters (26) in Längsrichtung nach vorn versetzt ist, und dadurch, dass sich der elastische Schenkel (62) in der auf dem Adapter (26) angebrachten und befestigten Position der Abdeckung (28) gegenüber einer Innenseite einer quer verlaufenden vorderen Endwand (40) der Abdeckung (28) erstreckt.

2. Adapter nach Anspruch 1, **dadurch gekennzeichnet, dass** die Entriegelungstaste (64) am Ende des elastischen Schenkels (62) angeordnet ist.

3. Adapter nach Anspruch 1 oder 2, **dadurch gekennzeichnet, dass** die Entriegelungstaste (64) eine quer ausgerichtete Verriegelungsfläche (68) umfasst, die geeignet ist, mit der Anschlagfläche (39) der Abdeckung (28) zusammenzuwirken, wobei sich die Verriegelungsfläche vorzugsweise am hinteren Teil der Entriegelungstaste (64) erstreckt.

4. Adapter nach Anspruch 3, **dadurch gekennzeichnet, dass** sich die Verriegelungsfläche (68) in einer vertikalen Ebene erstreckt.

5. Adapter nach einem der vorhergehenden Ansprüche, **dadurch gekennzeichnet, dass** jede der längs verlaufenden Seitenflächen (29a, 29b) des Körpers (25) des Adapters (26) eine an ihren zwei Enden mündende vordere vertikale Nut (58a, 58b) umfasst, wobei jede Nut geeignet ist, einen zugeordneten Ansatz (44a, 44b) der Abdeckung (28) gleitend aufzunehmen, wobei jede der längs verlaufenden Seitenflächen (29a, 29b) an ihrem unteren Ende einen zugeordneten Verriegelungsausschnitt (59a, 59b) umfasst, wobei jede vordere vertikale Nut (58a, 58b) in den zugeordneten Ausschnitt (59a, 59b) mündet.

6. Anordnung, welche einen Scheibenwischerarm und einen Adapter (26) nach einem der vorhergehenden Ansprüche umfasst, **dadurch gekennzeichnet, dass** die Abdeckung (28) des Scheibenwischerarmes eine quer verlaufenden vorderen Endwand (40) mit vertikaler Ausrichtung umfasst, welche eine Aussparung (42) umfasst, und dadurch, dass in der auf dem Adapter (26) angebrachten und verriegelten Position der Abdeckung (28) der elastische Schenkel (62) sich in Längsrichtung nach vorn durch die Aussparung (42) hindurch erstreckt.

7. Anordnung, welche ein Scheibenwischerblatt und ein Verbindungssystem, das dazu bestimmt ist, das Scheibenwischerblatt mit einem Antriebsarm zu verbinden, umfasst, wobei das Verbindungssystem einen an dem Scheibenwischerblatt befestigten Verbinder und einen Adapter nach einem der Ansprüche 1 bis 5 umfasst, wobei der Verbinder und der Adapter durch Gelenkmittel miteinander verbunden sind.

## Claims

1. Adapter (26) for a windscreen wiper, notably a motor vehicle, having a body (25) of longitudinally elongate shape which is delimited by two, longitudinal and vertical, external lateral faces (29a, 29b) and which is configured to be mounted in a complementary yoke (28) of inverted-U-shaped cross section belonging to a wiper arm, this yoke (28) having a pair of front locking pegs (44a, 44b) and an abutment surface (39) which are able to cooperate with associated parts of the adapter in order to fasten the yoke (28) to the adapter (26) in a removable manner,
each of the external lateral faces (29a, 29b) of the body (25) of the adapter (26) having a front locking notch (59a, 59b), each of which is able to receive an associated front locking peg (44a, 44b) of the yoke (28),
and the body (25) of the adapter (26) being provided with a resilient branch (62) bearing an unlocking button (64) which is able to cooperate with the abutment surface (39) of the yoke (28) in order to longitudinally immobilize the adapter (26) in one direction with respect to the yoke (28),
each of the longitudinal lateral faces (29a, 29b) of the body (25) of the adapter (26) having a rear vertical slot (60a, 60b) that is open at its two ends, each slot being able to receive an associated peg (46a, 46b) of the yoke (28) in a sliding manner, each of the longitudinal lateral faces (29a, 29b) having, at its lower end, an associated locking notch (61a, 61b), each rear vertical slot (60a, 60b) opening into the associated notch (61a, 61b),
**characterized in that** the resilient branch (62) extends longitudinally beyond a transverse end face (27a, 27b) of the body (25) of the adapter (26), the unlocking button (64) being offset vertically downwards with respect to an upper face (26c) of the body (25) of the adapter (26), the unlocking button (64) also being offset longitudinally forwards with respect to the plane of the front transverse end face of the body (25) of the adapter (26), and **in that** the resilient branch (62), in the mounted and fixed position of the yoke (28) on the adapter (26), extends next to an internal face of a front transverse end wall (40) of the yoke (28).

2. Adapter according to Claim 1, **characterized in that** the unlocking button (64) is arranged at the end of the resilient branch (62).

3. Adapter according to Claim 1 or 2, **characterized in that** the unlocking button (64) has a transversely oriented locking surface (68) that is able to cooperate with the abutment surface (39) of the yoke (28), said locking surface extending preferably at the rear of the unlocking button (64).

4. Adapter according to Claim 3, **characterized in that** the locking surface (68) extends in a vertical plane.

5. Adapter according to any one of the preceding claims, **characterized in that** each of the longitudinal lateral faces (29a, 29b) of the body (25) of the adapter (26) has a front vertical slot (58a, 58b) that is open at its two ends, each slot being able to receive an associated peg (44a, 44b) of the yoke (28) in a sliding manner, each of the longitudinal lateral faces (29a, 29b) having, at its lower end, an associated locking notch (59a, 59b), each front vertical slot (58a, 58b) opening into the associated notch (59a, 59b).

6. Assembly having a wiper arm and an adapter (26) according to any one of the preceding claims, **characterized in that** the yoke (28) of the wiper arm has a vertically oriented front transverse end wall (40) that has a cavity (42), and **in that**, in the mounted and locked position of the yoke (28) on the adapter (26), the resilient branch (62) extends longitudinally forwards through the cavity (42).

7. Assembly having a wiper blade and a connection system intended to join the wiper blade to a driving arm, said connection system comprising a connector fixed to the wiper blade and an adapter according to any one of Claims 1 to 5, the connector and the adapter being joined together by articulation means.
